# EUROPEAN PATENT SPECIFICATION

(11) **EP 3 254 823 B1**
(45) Date of publication and mention of the grant of the patent: **18.09.2019**
(21) Application number: 17174438.6
(22) Date of filing: 05.06.2017
(51) Int. Cl.: B29C 45/14, B29C 45/16, B29C 44/04, B29C 67/24, B29C 37/00, B65D 81/38, B29K 75/00, B29L 31/00

(54) **METHOD FOR MOLDING A TANK FOR REFRIGERATED CABINETS**
VERFAHREN ZUR FORMUNG EINES TANKS FÜR KÜHLMÖBEL
PROCÉDÉ POUR MOULER UN RÉSERVOIR POUR ARMOIRE RÉFRIGÉRÉE

(30) Priority: 06.06.2016 IT UA20164115
(43) Date of publication of application: 13.12.2017
(73) Proprietor: Carus S.r.l., 32020 Limana (BL) (IT)
(72) Inventor: Collazuol, Federico, 32020 Limana BL (IT)
(74) Representative: Perani & Partners S.p.A.

(56) References cited:
- WO-A1-2014/108067
- US-A1- 2006 165 947

## Description

The present invention concerns a method of molding a tank for refrigerated cabinets. Particularly, the method of the present invention is useful in making polymeric tanks, particularly but without limitation polyurethane tanks. Then, these tanks are used to make refrigerated cabinets for supermarkets, stores, snack bars and restaurants, and else.

In the prior art, these tanks are formed by filling polyurethane foam into enclosures that are formed either of plastic (for small pieces) by thermoforming or rotational molding, or of sheet metal (for larger pieces). More in detail, metal sheet enclosures for thermoforming are required to be assembled and sealed before polyurethane injection. If fixing points are required, these shall be added during assembly. Then, a low-density polymeric resin, typically polyurethane, is injected into the mold. Once the resin has been polymerized and cured, the mold is opened and the tank is removed.

Then, a water drain hole is formed at the bottom wall. A drainage pipe is fitted at the hole, with a seal to prevent leakages. Then, the tank may be integrated in a refrigerated cabinet.

Document WO 2014/108067 A1 is also considered part of the state of the art. This document discloses a method in which the low-density filler polymer is attached to the mold first, and the coating is added by injecting it afterwards.

### SUMMARY OF THE INVENTION

All prior art processes are affected by drawbacks. Namely, thermoforming and rotational molding have wide tolerances, which are often excessive. On the other hand, a less than optimal, or even very poor adhesion is created between the foam and the plastic or the foam and the sheet metal. Also the equipment required to form the enclosure (by thermoforming, rotational molding or by sheet metal forming) and the equipment required to fill it with low-density foam are separate. The step of preparing the enclosure is disadvantageously very long. End-of-life disposal of the tank materials must be carried out separately.

Therefore, the technical purpose of the present invention is to provide a method of molding a tank for refrigerated cabinets that can obviate the above mentioned prior art drawbacks.

Particularly, the object of the present invention is to provide a method of molding a tank for refrigerated cabinets that can afford a simpler, less expensive assembly.

The aforementioned technical purpose and objects are substantially fulfilled by a method of molding a tank for refrigerated cabinets that comprises the technical features as disclosed in one or more of the accompanying claims.

Namely, a method of molding a tank for refrigerated cabinets comprises different steps. First, a mold is provided for making the tank. At least one inner face of the mold is coated with a layer of high-density thermosetting resin of a first polymer.

Then, the mold is closed.

A low-density thermosetting resin of a second polymer is injected into the mold.

The resins are cured at least partially at the same time. In other words, the high-density resin starts to cure once it has been applied to the mold, and ends curing after injection of low-density resin. Therefore, the high-density thermosetting resin defines an enclosure. The low-density thermosetting resin defines a filler.

The above technical problem is solved because the above discussed method can provide a sandwich structure, which is much more rigid than the conventional tank structure. This structure does requires no additional reinforcement.

Advantageously, by having both resins cure at least partially at the same time, perfect adhesion of the two parts of the structure is achieved.

Advantageously, the method may be carried out using a single mold.

Preferably, the first polymer may be polyurethane or polyurea. The high-density resin has a density of more than 400 kg/m³, preferably 1000 kg/m³.

Preferably, the second polymer may be polyurethane. The low-density resin has a density of less than 150 kg/m³, preferably 50 kg/m³.

### LIST OF DRAWINGS

Further features and advantages of the present invention will result more clearly from the illustrative, non-limiting description of a preferred, non-exclusive embodiment of a method of molding a tank for refrigerated cabinets as shown in the annexed drawings, in which:

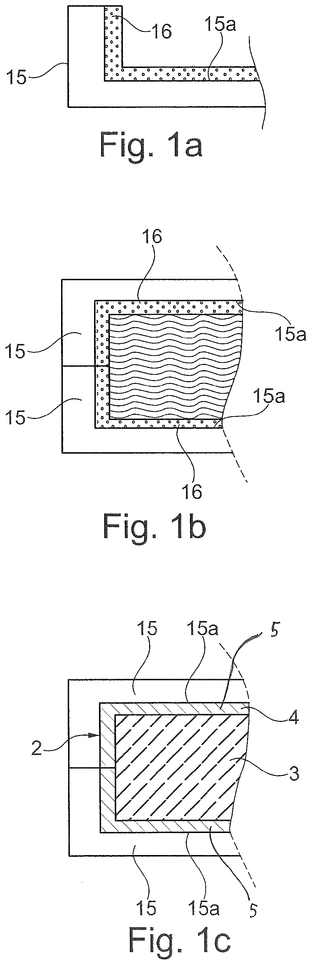

- Figures 1a, 1b and 1c show respective steps of a method of molding a tank for refrigerated cabinets;
- FIG. 2 is a perspective view of a tank for refrigerated cabinets molded according to the method of the present invention;
- Figure 3 is a bottom view of the detail of Figure 2; and
- Figure 4 is a sectional side view of a detail of the tank of Figures 2 and 3.

### DETAILED DESCRIPTION

Referring to the annexed figures, numeral 1 designates a tank for refrigerated cabinets of the present invention.

This tank 1 is defined by at least one wall 2. Such wall 2 comprises a low-density polymeric filler 3. The filler 3 is enclosed by a high-density enclosure 4. In other words, the wall 2 has a sandwich structure, i.e. a filler 3 made of a lighter material, disposed between two panels 5 made of more resistant material. In combination, the panels 5 define the enclosure 4. Preferably, the enclosure 4 is formed of one piece.

It shall be noted that the enclosure 4 may be made of a single material or, in alternative embodiments, not shown, it may be defined by multiple layers 16 of different materials. Further details will be provided hereinbelow.

More in detail, it shall be noted that, in a preferred embodiment of the invention, the filler 3 and the enclosure 4 are made from polymers of the same group or from two compatible polymers, to ensure optimal adhesion between the filler 3 and the enclosure 4. Namely, such polymer may be polyurethane or polyurea.

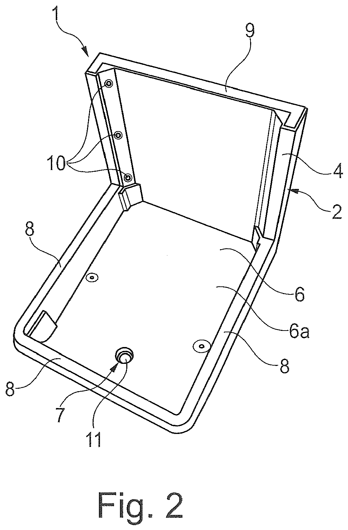

Particularly referring to Figure 2, the wall 2 comprises a bottom wall 6. Such bottom wall 6 has a concave inner surface 6a, for channeling water toward a drain 7 that extends through the bottom wall 6.

The inner surface 6a of the bottom wall 6 is advantageously free of any sharp edges, for easier cleaning.

Three edges 8 of the bottom wall 6 extend vertically from the ends of the surface 6a of the bottom wall 6. A post 9 also extends transverse to the bottom wall 6. Preferably, the post 9 has two or more coupling areas 10 for shelves (no shown) to be fixed thereto, to support objects to be displayed and refrigerated.

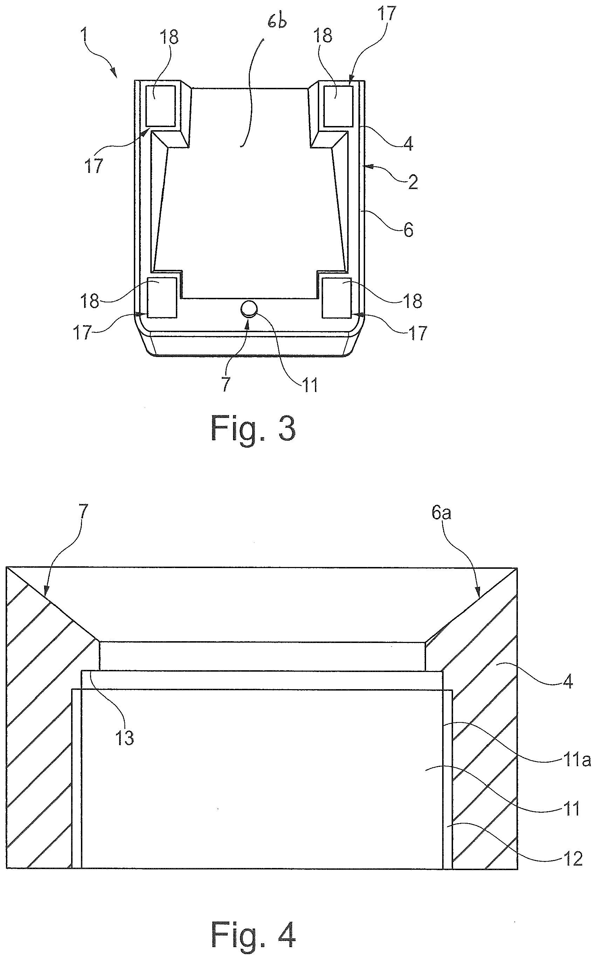

Referring to Figure 3, the bottom wall 6 has an outer surface 6b. Four supports 17 are arranged at the corners of the outer surface 6b, and are adapted to be attached each to a respective leg (not shown) of the refrigerated cabinet. Reinforcement members 18 may be embedded in the supports 17, particularly in the part of the enclosure 4 that defines such supports 17. Each of these reinforcement members 17 is preferably defined by a metal plate.

Referring to Figures 2 and 4, the tank has a hole 11 for water drainage at the bottom wall 6. Such hole 11 is particularly defined by the high density enclosure 4, such that threads 12 may be formed on an inner cylindrical surface 11a thereof.

An abutment flange 13 is formed in the hole 11 at its inner cylindrical surface 11a. Thus, a commercially available threaded pipe (not shown) may complete the drain 7.

It will be appreciated that the inner surface 6a of the bottom wall 6 and the hole 11 define a step-free drain 7, for improved, stagnation-free, water drainage.

It shall be noted that the bottom wall 6 advantageously has a plurality of additional holes (not shown) for the passage of the pipes of the refrigeration system (not shown).

The tank 1 is manufactured by molding. Particularly, a mold 15 is provided. At least one inner face 15a of the mold 15 is coated with a layer 16 of high-density thermosetting resin of a first polymer. Preferably, all the inner faces of the mold 15 are coated with such high-density thermosetting resin. Namely, the first polymer is polyurethane or polyurea. The high-density resin has a density of more than 400 kg/m³, preferably 1000 kg/m³. It shall be noted that, in alternative embodiments of the invention, this step may be repeated multiple times, each with a different type of high-density thermosetting resin, to define multiple overlapping layers 16 of different materials.

It shall be noted that, as the mold 15 is being coated, one or more of the aforementioned rigid reinforcement members 18, preferably made of metal, may be embedded in the high-density resin.

Optionally, the inner face 15a of the mold 15 may be coated with an additional layer (not shown) of paint before applying the high-density resin. The paint adheres to the exterior of the layer 16. This technique is known in the art as "In Mold Coating", IMC. The IMC paint may be then protected by a transparent varnish to be applied outside the mold 15. IMC is a less expensive alternative to classical liquid coating outside the mold 15.

Then, the mold 15 is closed. A low-density thermosetting density of a second polymer is injected into the mold 15. Namely, the amount of injected resin is related to the degree of expansion of the resin inside the mold 15. It will be appreciated that resin expansion causes an increase of pressure inside the mold 15.

More in detail, the second polymer is preferably polyurethane. The low-density resin has a density of less than 150 kg/m³, preferably ranging from 40 to 50 kg/m³.

It shall be noted that the steps of closing the mold 15 are carried out before curing of the high.density resin that defines the layer 16. Advantageously, this will provide a single enclosure 4.

High- and low-density thermosetting resins are cured at least partially at the same time. In other words, the high-density resin starts to cure after application of the high-density resin layer 16, and is fully cured after injection of the low-density resin. Once both resins have completely cured, the enclosure 4 is defined by the high-density thermosetting resin, i.e. by the solidification of the initially applied layer 16. The filler 3 is defined by the low-density thermosetting resin.

Then, the tank 1 is removed from the mold 15 and, if needed, is varnished before assembly of the refrigerated cabinet.

## Claims

1. A method of molding a tank (1) for refrigerated cabinets, comprising the steps of providing a mold (15) for manufacturing said tank (1), coating an inner face (15a) of said mold (15) with a layer of high-density thermosetting resin of a first polymer; closing said mold (15); injecting a low-density thermosetting resin of a second polymer into said mold (15); curing said high-density thermosetting resin to thereby define an enclosure (4); curing said low-density thermosetting resin to define a filler (4); **characterized in that** said curing steps on the high- and low-density resins are carried out at least partially at the same time.

2. A method as claimed in the preceding claim, **characterized in that** said step of coating said mold (15) with said layer of high-density resin (16) precedes said step of closing said mold (15).

3. A method as claimed in any of the preceding claims, **characterized in that** said step of injecting said low-density resin precedes the end of said step of curing said high-density resin.

4. A method as claimed in any of the preceding claims, **characterized in that** said first polymer is polyurethane or polyurea, said high-density resin having a density of more than 400 kg³/m, preferably 1000 kg/m³.

5. A method as claimed in any of the preceding claims, **characterized in that** said second polymer is polyurethane, said low-density resin having a density of less than 150 kg/m³, preferably ranging from 40 to 50 kg/m³.

6. A method as claimed in any of the preceding claims, **characterized in that** it comprises the additional step of burying a rigid reinforcement member (18), preferably made of a metal material, in said high-density resin.

7. A method as claimed in any of the preceding claims, **characterized in that** it comprises the additional step of coating said inner face (15a) of said mold (15) with an additional layer of paint before applying said high-density resin.

## Patentansprüche

1. Eine Methode zur Formung eines Behälters (1) für Kühlschränke, umfassend die Schritte des Bereitstellens einer Form (15) zum Herstellen dieses Behälters (1); Beschichten einer Innenwand (15a) dieser Form (15) mit einer Schicht aus einem ersten wärme-aushärtenden Polymerharz hoher Dichte;
Schließen der Form (15); Einspritzen in diese Form (15) eines zweiten wärme-aushärtenden Polymerharzes geringer Dichte; Härten des wärme-aushärtenden Harzes hoher Dichte, um dadurch ein Gehäuse (4) zu definieren; Härten des wärme-aushärtenden Harzes geringer Dichte, um eine Einlage (4) zu definieren, **dadurch gekennzeichnet, dass** die Härteschritte der Harze hoher und geringer Dichte zumindest teilweise gleichzeitig ausgeführt werden.

2. Eine Methode wie im vorhergehenden Anspruch beansprucht, **dadurch gekennzeichnet, dass** dem Schritt des Schließens der Form (15) der Schritt des Beschichtens der Form (15) mit der Schicht aus Harz (16) hoher Dichte vorangeht.

3. Eine Methode wie in irgendeinem der vorhergehenden Ansprüche beansprucht, **dadurch gekennzeichnet, dass** dem Ende des Schrittes des Härtens des Harzes hoher Dichte dem Schritt des Einspritzens des Harzes geringer Dichte vorangeht.

4. Eine Methode wie in irgendeinem der vorhergehenden Ansprüche beansprucht, **dadurch gekennzeichnet, dass** dieser erste Polymer Polyurethan oder Polyharnstoff ist, dieser Harz hoher Dichte eine Dichte von mehr als 400 kg³/m, bevorzugt 1000 kg/m³ aufweist.

5. Eine Methode wie in irgendeinem der vorhergehenden Ansprüche beansprucht, **dadurch gekennzeichnet, dass** dieser zweite Polymer Polyurethan ist, dieser Harz geringer Dichte eine Dichte von weniger als 150 kg/m³, bevorzugt im Bereich von 40 bis 50 kg/m³ aufweist.

6. Eine Methode wie in irgendeinem der vorhergehenden Ansprüche beansprucht, **dadurch gekennzeichnet, dass** sie den zusätzlichen Schritt umfasst, einen starren, vorzugsweise aus einem metallischen Material hergestellten Verstärkungsteil (18) in diesem Harz hoher Dichte zu vergraben.

7. Eine Methode wie in irgendeinem der vorhergehenden Ansprüche beansprucht, **dadurch gekennzeichnet, dass** sie den zusätzlichen Schritt des Beschichtens der Innenwand (15a) der Form (15) mit einer zusätzlichen Farbschicht vor dem Auftragen des Harzes hoher Dichte umfasst.

## Revendications

1. Procédé de moulage d'un réservoir (1) pour armoires réfrigérées, comprenant les étapes de fournir un moule (15) pour fabriquer ledit réservoir (1), revêtir une face interne (15a) dudit moule (15) avec une couche de résine thermodurcissable à haute densité d'un premier polymère ; fermer ledit moule (15) ; injecter une résine thermodurcissable à basse densité d'un deuxième polymère dans ledit moule (15) ; durcir ladite résine thermodurcissable à haute densité pour définir ainsi un espace clos (4) ; durcir ladite résine thermodurcissable à basse densité pour définir un remplissage (4) ; **caractérisé en ce que** lesdites étapes de durcissement sur les résines à haute et basse densité sont réalisées au moins partiellement en même temps.

2. Procédé selon la précédente revendication, **caractérisé en ce que** ladite étape de revêtir ledit moule (15) avec ladite couche de résine à haute densité (16) précède ladite étape de fermer ledit moule (15).

3. Procédé selon l'une quelconque des revendications précédentes, **caractérisé en ce que** ladite étape d'injecter ladite résine à basse densité précède la fin de ladite étape de durcir ladite résine à haute densité.

4. Procédé selon l'une quelconque des revendications précédentes, **caractérisé en ce que** ledit premier polymère est polyuréthane ou polyuréa, ladite résine à haute densité ayant une densité supérieure à 400 kg³/m, de préférence 1000 kg/m³.

5. Procédé selon l'une quelconque des revendications précédentes, **caractérisé en ce que** ledit deuxième polymère est polyuréthane, ladite résine à basse densité ayant une densité inférieure à 150 kg³/m, de préférence allant de 40 à 50 kg/m³.

6. Procédé selon l'une quelconque des revendications précédentes, **caractérisé en ce qu'**il comporte l'étape supplémentaire d'enfouir un élément de renforcement rigide (18), de préférence réalisé en un matériau métallique, dans ladite résine à haute densité.

7. Procédé selon l'une quelconque des revendications précédentes, **caractérisé en ce qu'**il comporte l'étape supplémentaire de revêtir ladite face interne (15a) dudit moule (15) avec une couche supplémentaire de peinture avant d'appliquer ladite résine à haute densité.
